# EUROPÄISCHE PATENTANMELDUNG

(11) **EP 0 888 954 A1**
(43) Veröffentlichungstag der Anmeldung: **07.01.1999**
(21) Anmeldenummer: 98108266.2
(22) Anmeldetag: 06.05.1998
(51) Int. Cl.: B62D 25/24

(54) **Verschlussdeckel aus Kunststoff**

(30) Priorität: 01.07.1997 DE 29711482 U
(71) Anmelder: TRW Automotive Electronics & Components GmbH & Co. KG, 78315 Radolfzell (DE)
(72) Erfinder: Bockenheimer, Alexander, 51491 Overrath (DE)
(74) Vertreter: Schieschke, Klaus, Dipl.-Ing.

(57) **Zusammenfassung**

Die Erfindung betrifft einen Verschlussdeckel aus Kunststoff, insbesondere zum Verschließen einer Öffnung in einem Träger, insbesondere einer Kraftfahrzeug-Karosserie mit einem Bodenteil, an welches sich eine sich durch die Öffnung des Trägers erstreckende Wandung anschließt, wobei die Wandung und/oder das Bodenteil am Außenumfang eine umlaufende Dichtlippe aufweist und wobei die Wandung (5, 5') oberhalb der Trägeröffnung (2) mit mindestens einer Verbindung (10) zur Oberseite des Bodenteils (4) versehen ist, das Bodenteil (4) einstückig mit einem Wasserablaufventil (12; 12'; 12'') verbunden ist und das Wasserablaufventil (12; 12'; 12'') eine Ventilklappe (14, 14', 14'') aufweist, welche parallel zur Trägerebene (A-A) verläuft.

## Beschreibung

Die Erfindung bezieht sich auf einen Verschlussdeckel aus Kunststoff, insbesondere zum verschließen einer Öffnung in einem Träger, insbesondere einer Kraftfahrzeugkarosserie, mit einem Bodenteil, an welches sich eine sich durch die Öffnung des Trägers erstreckende Wandung anschließt, wobei die Wandung und/oder das Bodenteil am Außenumfang eine umlaufende Dichtlippe aufweist.

Als Stand der Technik sind bereits derartige Verschlussdeckel bekannt, welche im Allgemeinen zum Verschließen einer Trägeröffnung dienen (DE-OS 35 12 582, DE-OS 34 46 151, DE-AS 1 555 007, DE-OS 34 27 623, FR-PS 1 208 746). Derartige Verschlußdeckel weisen zumeist einander gegenüberliegende Dichtlippen auf, welche jeweils eine Fläche eines Trägers im Bereich der Öffnung beaufschlagen und somit einen dichten Abschluss herstellen.

Aufgabe der vorliegenden Erfindung ist es nun, einen derartigen Verschlussdeckel so weiter zu entwickeln, dass bei einfachem Aufbau eventuell vorhandenes Wasser abgeführt werden kann.

Diese Aufgabe wird erfindungsgemäß dadurch gelöst, dass die Wandung oberhalb der Trägeröffnung mit mindestens einer Verbindung zur Oberseite des Bodenteils versehen ist, dass das Bodenteil einstückig mit einem Wasserablaufventil verbunden ist und dass das Wasserablaufventil eine Ventilklappe aufweist, welche parallel zur Trägerebene verläuft. Hierdurch ergibt sich der Vorteil einer Doppelfunktion des Verschlussdeckels: Zum einen dient er zum Verschließen einer Trägeröffnung, insbesondere in einer Kraftfahrzeugkarosserie, und zum anderen ist eine Ventilfunktion gegeben, d. h. auf einfache Weise eventuell angesammeltes Wasser abgeführt werden kann. Die Trägeröffnung in der Kraftfahrzeugkarosserie kann beispielsweise als Kragenloch, als Durchgangsloch, als Formloch oder als Rundloch ausgebildet sein.

In einer ersten Ausführungsform kann die Ventilklappe an das Bodenteil anschließen, wobei sie innenseitig mit einer Rinne versehen ist, welche kürzer als die Länge der Ventilklappe ist. Die Ventilklappe kann in etwa Rechteckform aufweisen und stirnseitig mit einer Abrundung versehen sein. Weiterhin können sich zwei Sicken einander gegenüber liegen, wobei die Länge der Sicken auf die Abschlussfläche kürzer sein kann als die Breite der Rille an der Innenseite der Ventilklappe. Durch die Gestaltung dieser Sicken bzw. Rippen kann die Steifigkeit der Ventilklappe auf einfache Weise funktionsgerecht eingestellt werden.

Die Verbindung in der Wandung des Verschlussdeckels kann entweder als Ausschnitt oder als Durchbruch ausgebildet sein. Weiterhin kann eine umlaufende Rinne im Bodenteil im Bereich des Außenumfangs der Wandung Anwendung finden.

Nach einer anderen Ausführungsform der Erfindung kann die Ventilklappe des Wasserablaufventils oberseitig eine Platte beaufschlagen, welche an die Wandung des Verschlussdeckels anschließt und außerhalb der Öffnung parallel zur Trägerebene verläuft. Hierbei können die Platte und die Ventilklappe die gleiche Länge aufweisen.

Gemäß einer anderen Bauform der Erfindung kann das Wasserablaufventil mit einer in das Bodenteil integrierten, parallel versetzten Ventilklappe versehen sein, welche innenseitig eine im Bereich der Trägeröffnung angeordneten Platte des Bodenteils außenseitig beaufschlagt. Das mit der Ventilklappe verbundene Bodenteil und/oder die Platte des Bodenteils kann innenseitig mit Rippen versehen sein, welche sich über den gesamten Umfang des betreffenden Teils erstrecken können.

Die Erfindung wird nachfolgend anhand von in der Zeichnung dargestellten Ausführungsbeispielen näher beschrieben. In der Zeichnung zeigen:
- Fig.1: eine Seitenansicht eines Verschlussdeckels mit Ventilfunktion im Mittelschnitt;
- Fig. 2: eine perspektivische Draufsicht auf den Verschlussdeckel nach Fig. 1;
- Fig. 3: eine Unteransicht des Verschlussdeckels nach Fig. 1;
- Fig.4: eine perspektivische Unteransicht des in Fig. 1 bis 3 dargestellten Verschlussdeckels;
- Fig.5a+b: zwei verschiedene Ausführungsmöglichkeiten der Gestaltung des Durchbruchs durch die Wandung im Schnitt;
- Fig. 6+7: zwei weitere Ausführungsmöglichkeiten der Gestaltung des Verschlussdeckels mit Ventilfunktion, jeweils im Mittelschnitt.

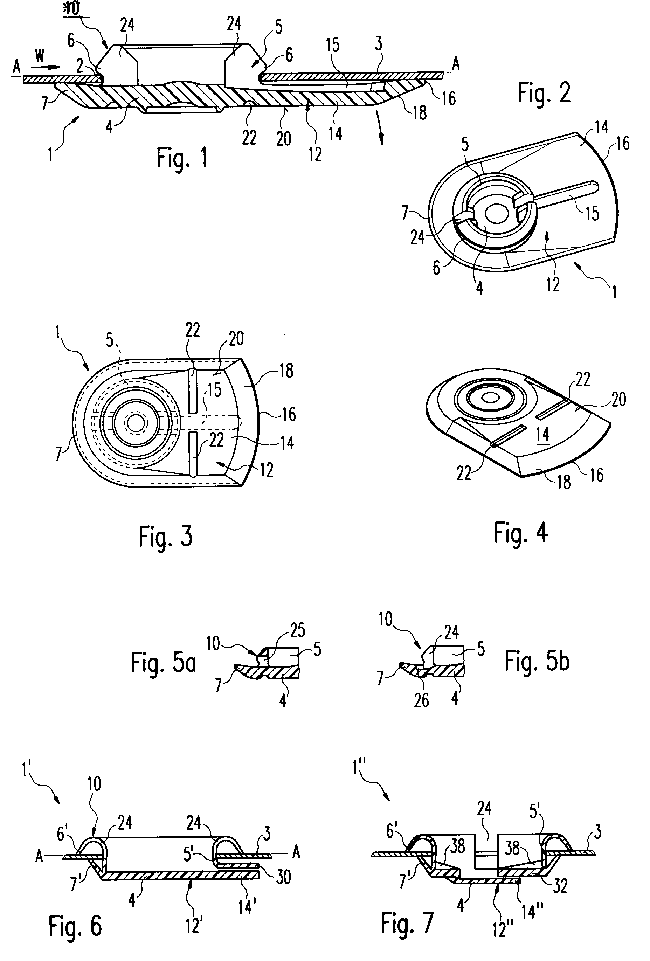

In den Fig. 1 bis 4 ist ein Verschlussdeckel 1 aus Kunststoff dargestellt, welcher insbesondere zum Verschließen einer Öffnung 2 in einem Träger 3, beispielsweise einer Kraftfahrzeugkarosserie dient. Dieser Verschlussdeckel 1 weist ein Bodenteil 4 auf, an welches sich eine sich durch die Öffnung 2 des Trägers 3 erstreckende Wandung 5 anschließt. Die Wandung 5 und das Bodenteil 4 besitzen am Außenumfang jeweils eine umlaufende Dichtlippe 6 und 7. Diese Dichtlippen stehen sich einander gegenüber und beaufschlagen den Träger 3 im Bereich der Öffnung 2.

Die Wandung 5 weist oberhalb der Trägeröffnung 2 mindestens eine Verbindung 10 zur Oberseite des Bodenteils 4 auf. Diese Verbindung 10 durch die Wandung 5 kann insbesondere nach Fig. 5b als Ausschnitt 24 ausgebildet sein, wobei aus Fig. 1 hervorgeht, dass sich zwei Ausschnitte 24-24 diagonal einander gegenüberliegen.

Das Bodenteil 4 ist einstückig mit einem Wasserablaufventil 12 verbunden, wobei dieses Wasserablaufventil 12 eine Ventilklappe 14 aufweist, welche parallel zur Trägerebene A-A verläuft. Die Ventilklappe 14 schließt an das Bodenteil 4 an und ist innenseitig mit einer Rinne 15 versehen, wie insbesondere Fig. 2 zu entnehmen ist. Diese Rinne 15 ist kürzer als die Länge der Ventilklappe 14. Aus Fig. 2 und 3 geht hervor, dass die Ventilklappe 14 in etwa rechteckförmig ausgebildet und stirnseitig mit einer Abrundung 16 versehen ist.

Fig. 1 und Fig. 4 lassen erkennen, dass die Abrundung 16 über eine Schräge 18 in eine Abschlussfläche 20 der Ventilklappe 14 übergeht.

Aus Fig. 3 und 4 geht hervor, dass die Abschlussfläche 20 mit zwei einander gegenüberliegenden Sicken 22 versehen ist, wobei die Länge der Sicken 22 auf der Abschlussfläche 20 kürzer ist als die Breite der Rinne 15 an der Innenseite der Ventilklappe 14. Mit Hilfe dieser Sicken 22 lässt sich die Steifigkeit der Ventilklappe 14 auf einfache Weise einstellen.
Es ist alternativ auch möglich, statt der Sicken 22 die gesamte Ventilklappe 14 dünner auszubilden und mit Rippen zu verstärken, wodurch ebenfalls die erforderliche Steifigkeit der Ventilklappe 14 hergestellt werden kann.

Die Ventilklappe 14 kann nach Fig. 1 durch Überdruck aus dem Fahrzeuginneren oder durch Unterdruck von außen schnell vorbeiströmender Luft in Pfeilrichtung geöffnet werden, wodurch es möglich ist, dass beispielsweise unerwünschtes Wasser W in Pfeilrichtung durch die Ausschnitte 24 zur Oberseite des Bodenteils 4 läuft und schließlich über die geöffnete Ventilklappe 14 abgeführt wird.

Während bei der Ausführungsform nach Fig. 1 bis 4 die Wandung 5 mit mindestens einem Ausschnitt 24 zum Durchströmen des Wassers zum Bodenteil 4 versehen ist, besteht darüber hinaus auch die Möglichkeit, dass nach Fig. 5b eine umlaufende Rinne 26 im Bodenteil 4 im Bereich des Außenumfangs der Wandung 5 Anwendung findet. Durch diese umlaufende Rinne 26 wird eine weitere Möglichkeit geschaffen, den Fluss des Wassers W zum Bodenteil 4 zu erleichtern.

Nach Fig. 5a besteht darüber hinaus die Möglichkeit, dass die Verbindung 10 in der Wandung 5 als Durchbruch 25 ausgebildet ist.

Fig. 6 zeigt eine andere Ausführungsform der Erfindung: Hier ist oberhalb der Ventilklappe 14' des Wasserablaufventils 12' eine Platte 30 vorgesehen, welche von der Ventilklappe 14' beaufschlagt wird. Diese Platte 30 schließt sich an die Wandung 5' des Verschlussdeckels 1' an und verläuft außerhalb der Öffnung 2 parallel zur Trägerebene A-A. Es liegen damit zwei plattenförmige Elemente, nämlich die Ventilklappe 14' und die Platte 30 vor, welche sich in Schließstellung beaufschlagen.

Liegt Überdruck im Fahrzeuginnenraum oder Unterdruck durch außen schnell vorbeiströmende Luft vor, so öffnet sich die Ventilklappe 14' in die Position nach Fig. 6, so dass unerwünschtes Wasser über die Ausschnitte 24 und das Bodenteil 4 zur Ventilklappe 14' strömen und abgeführt werden kann.

Aus Fig. 6 geht hervor, dass die Platte 30 und die Ventilklappe 14' in etwa die gleiche Länge aufweisen.

Fig. 7 zeigt eine dritte Ausführungsform der Erfindung: Hier ist das Wasserablaufventil 12'' mit einer in das Bodenteil integrierten, parallel versetzten Ventilklappe 14'' versehen, welche innenseitig eine im Bereich der Trägeröffnung 2 angeordneten Platte 32 des Bodenteils 4 außenseitig beaufschlagt. Das Bodenteil 4 und die Platte 32 können innenseitig mit Rippen 38 verstärkt werden. Damit besteht die Möglichkeit, dass die Ventilklappe 14'' nach Erkalten des Spritzgussteils geschlossen ist.

Auch bei dieser Ausführungsform ist die Wandung 5' wiederum mit Durchbrüchen 10 versehen, damit gewährleistet ist, dass Wasser in den Bereich der Oberseite des Bodenteils 4 gelangt.

Allen drei Ausführungsformen des Verschlussdeckels ist gemeinsam, dass diese eine Doppelfunktion insofern besitzen, als auch unerwünschtes Wasser auf einfache Weise abgeführt werden kann.

## Patentansprüche

1. Verschlussdeckel aus Kunststoff, insbesondere zum Verschließen einer Öffnung in einem Träger, insbesondere einer Kraftfahrzeug-Karosserie mit einem Bodenteil, an welches sich eine sich durch die Öffnung des Trägers erstreckende Wandung anschließt, wobei die Wandung und/oder das Bodenteil am Außenumfang eine umlaufende Dichtlippe aufweist,
**dadurch gekennzeichnet**,
dass die Wandung (5, 5') oberhalb der Trägeröffnung (2) mit mindestens einer Verbindung (10) zur Oberseite des Bodenteils (4) versehen ist,
dass das Bodenteil (4) einstückig mit einem Wasserablaufventil (12; 12'; 12'') verbunden ist und
dass das Wasserablaufventil (12; 12'; 12'') eine Ventilklappe (14, 14', 14'') aufweist, welche parallel zur Trägerebene (A-A) verläuft.

2. Verschlussdeckel nach Anspruch 1, **dadurch gekennzeichnet**, dass die Ventilklappe (14) an das Bodenteil (4) anschließt (Fig. 1 bis 4).

3. Verschlussdeckel nach Anspruch 1 und 2, **dadurch gekennzeichnet**, dass die Ventilklappe (14) innenseitig mit einer Rinne (15) versehen ist, welche kürzer als die Länge der Ventilklappe (14) ist (Fig. 1, Fig. 2).

4. Verschlussdeckel nach Anspruch 1 bis 3, **dadurch gekennzeichnet**, dass die Ventilklappe (14) in etwa Rechteckform aufweist und stirnseitig mit einer Abrundung (16) versehen ist.

5. Verschlussdeckel nach Anspruch 4, **dadurch gekennzeichnet**, dass die Abrundung (16) über eine Schräge (18) in eine Abschlussfläche (20) der Ventilklappen (14) übergeht.

6. Verschlussdeckel nach Anspruch 5, **dadurch gekennzeichnet**, dass die Abschlussfläche (20) mit mindestens einer Sicke (22) versehen ist.

7. Verschlussdeckel nach Anspruch 6, **dadurch gekennzeichnet,** dass sich zwei Sicken (22) einander gegenüberliegen.

8. Verschlussdeckel nach Anspruch 3 und 7, **dadurch gekennzeichnet**, dass die Länge der Sicken (22) auf der Abschlussfläche (20) kürzer ist als die Breite der Rinne (15) an der Innenseite der Ventilklappe (14).

9. Verschlussdeckel nach einem oder mehreren der vorhergehenden Ansprüche, **dadurch gekennzeichnet,** dass die Verbindung (10) in der Wandung (5) als Ausschnitt (24) ausgebildet ist.

10. Verschlussdeckel nach einem oder mehreren der Ansprüche 1 bis 8, **dadurch gekennzeichnet,** dass die Verbindung (10) in der Wandung (5) als Durchbruch (25) ausgebildet ist.

11. Verschlussdeckel nach Anspruch 9 oder 10, **gekennzeichnet durch** eine umlaufende Rinne (26) im Bodenteil (4) im Bereich des Außenumfangs der Wandung (5).

12. Verschlussdeckel nach Anspruch 2, 9 oder 10, **dadurch gekennzeichnet,** dass die Ventilklappe (14') des Wasserablaufventils (12') oberseitig eine Platte (30) beaufschlagt, welche an die Wandung (5') des Verschlussdeckels (1') anschließt und außerhalb der Öffnung (2) parallel zur Trägerebene (A-A) verläuft (Fig. 6).

13. Verschlussdeckel nach Anspruch 12, **dadurch gekennzeichnet,** dass die Platte (30) und die Ventilklappe (14') die gleiche Länge aufweisen.

14. Verschlussdeckel nach Anspruch 1, 9 oder 10, **dadurch gekennzeichnet**, dass das Wasserablaufventil (12'') mit einer in das Bodenteil (4) integrierten, parallel versetzten Ventilklappe (14'') versehen ist, welche innenseitig eine im Bereich der Trägeröffnung (2) angeordneten Platte (32) des Bodenteils (4) außenseitig beaufschlagt (Fig. 7).

15. Verschlussdeckel nach Anspruch 14, **dadurch gekennzeichnet**, dass das mit der Ventilklappe (14'') verbundene Bodenteil (4) und/oder die Platte (32) des Bodenteils (4) innenseitig mit Rippen (38) versehen ist.

16. Verschlussdeckel nach Anspruch 15, **dadurch gekennzeichnet**, dass sich die Rippen über den gesamten Umfang des Bodenteils (4) und/oder der Platte (32) erstrecken.
